# EUROPEAN PATENT APPLICATION

(11) **EP 2 541 421 A1**
(43) Date of publication of application: **02.01.2013**
(21) Application number: 11746996.5
(22) Date of filing: 16.02.2011
(51) Int. Cl.: G06F 12/00, G06F 3/06, G06F 11/00

(54) **PROCESSING DEVICE AND WRITE METHOD**

(30) Priority: 04.02.2011 JP 2011022605; 26.02.2010 JP 2010043428
(71) Applicant: JVC KENWOOD Corporation, Yokohama-shi Kanagawa 221-0022 (JP)
(72) Inventor: TONAMI, Junichiro, Yokohama-shi Kanagawa 221-0022 (JP)
(74) Representative: Wagner, Karl H.
(86) International application number: PCT/JP2011/000847
(87) International publication number: WO 2011/105023

(57) **Abstract**

An acquiring unit (130) acquires, from a storage device capable of storing a file by dividing the file into a plurality of blocks, managing information indicating an address of each block configuring the file. A creating unit (132) creates a table indicating a start address and a size of each continuous region by extracting the address of each block from the acquired managing information, and aggregating blocks having continuous addresses as a continuous region. A reading unit (134) reads a file stored in a non-volatile memory. A dividing unit (136) divides the read file into a plurality of blocks. A writing unit (138) writes the divided file to the storage device in units of the continuous region, which is from the start address over the size, based on the table, so as to maintain the addresses indicated in the managing information.

## Description

### Technical Field

The present invention relates to a writing technique, and to a processing device and a writing method for writing a file to a storage medium.

### Background Art

Generally, an operating system is installed in a computer, and various types of software programs are operated based on this operating system. Upon activation of the computer, the operating system becomes capable of operation by a BIOS (Basic Input Output System) activating a boot loader by copying the same to a RAM, and the boot loader reading an image file of the operating system stored in a hard disk drive (HDD) to the RAM. Here, in the image reading of the operating system by the boot loader, a file allocation table is constantly referenced. However, the reading with reference to the file allocation table in general cannot be performed at a high speed, so such had been hindering shortening of an activation time of the operating system (for example, see Patent Literature 1).

### Citation List

### Patent Literature

Patent Literature 1: Japanese Patent Application Laid-Open No. 2004-246787

### Summary of Invention

### Technical Problem

A firmware may be stored in a HDD. For example, a firmware downloaded from a tuner or a network, or a firmware copied from a detachable storage medium is temporarily stored in the HDD. Here, a firmware is updated by the firmware stored in the HDD being written to a non-volatile memory such as a FLASH ROM. The storage of the firmware to the HDD and the writing of the firmware to the non-volatile memory can be performed by an application program. However, in regards to the writing to the non-volatile memory, the application cannot be activated subsequently if a power failure or an erroneous unplugging happens during processing. Thus, also in view of a recovery process, it is desirable for the boot loader to perform the processes.

On the other hand, even if the application program stores the firmware on a file system, the boot loader that does not comply with the file system must designate a block address and directly read the firmware. To explain more specifically, the boot loader analyzes file system information. In a case of ext2, the file system information corresponds to a super block, a file descriptor, and the like. Subsequent to this, the boot loader searches a directory entry, extracts an initial address of the firmware, and thereafter reads contents of a necessary file or a part thereof.

In an ISO 9660 file system used in a CD-ROM and the like, reading can be simply performed by suitably demarcating reading units if the initial address of the file can be extracted, since block addresses of contents of the file are continuous. However, in the case of the ext2, block addresses of contents of a file are not continuous, and i-nodes are included irregularly between data. Due to this, the boot loader that does not use the file system reads the file by extracting an address indicated by the i-node for each block unit. An overload of a seek access occurs each time the i-node is read, and the process takes time. Such a problem is not only problematic upon reading, but similarly exists upon writing.

In a case where a firmware of an old version, or a part thereof needs to be stored in the HDD, when a file created in accordance with a rule of the file system is updated, block addresses of the file to be created change each time. Due to this, a block address that is to be a target of the reading and writing cannot be determined, as a result of which an incorporation of processes corresponding to the file system to the boot loader becomes necessary. As a result, a code volume of the boot loader is increased. This is not desirable for an assembled device with a limited resource. As a workaround of this, there is a method to operate without using the file system, however, such a method on the other hand disables reading and writing of a file from the application program, and in addition disables storing of other files.

The present invention has been made in view of the foregoing, and a purpose is to provide a technique that shortens a process delay of reading and writing a file by a boot loader.

### Solution to Problem

To solve the above-mentioned problems, a processing device according to an aspect of the present invention includes: an acquiring unit configured to acquire, from a storage device capable of storing a file by dividing the file into a plurality of blocks, managing information indicating an address of each block configuring the file; a creating unit configured to create a table indicating a start address and a size of each continuous region by extracting the address of each block from the managing information acquired by the acquiring unit, and aggregating blocks having continuous addresses as a continuous region; a reading unit configured to read data stored in a non-volatile memory; and a writing unit configured to divide the data in units of the continuous region from the start address to an end address determined by the size, based on the table created by the creating unit, and write the divided data to the storage device so as to maintain the address of each block configuring the file as indicated in the managing information.

According to this aspect, the table indicating the start addresses and the sizes corresponding to the continuous regions is created from the storage device, and the file is written in the storage device in accordance with the table. Thus, the writing time can be shortened.

The acquiring unit may re-acquire managing information indicating the address of each block from the storage device in which the file is stored by being divided into the plurality of blocks; the creating unit may re-create a table indicating the start address and the size of each continuous region by extracting the address of each block from the managing information re-acquired by the acquiring unit, and re-aggregating blocks having continuous addresses as a continuous region; the reading unit may read the data of each block configuring the file stored by being divided in the storage device, in the units of the continuous region from the start address to the end address determined by the size, based on the table re-created by the creating unit; and the writing unit may write the data of each block that is read by the reading unit to the non-volatile memory. In this case, an updating time can be shortened because the table indicating the start addresses and the sizes corresponding to the continuous regions in the file stored in the storage device is re-created, and the reading process is performed in accordance with the table.

In writing the divided data to the storage device, the writing unit may update at least one of an attribute, a file name, and an update time among file information stored in the storage device. In this case, since at least one of the attribute, the file name, and the update time is updated, a proof that the update has been completed can be marked.

Another aspect of the present invention is also a processing device. The processing device includes: an acquiring unit configured to acquire, from a storage device storing a first firmware program by dividing the first firmware program into a plurality of blocks, managing information indicating an address of each block; a creating unit configured to create a table indicating a start address and a size of each continuous region by extracting the address of each block from the managing information acquired by the acquiring unit, and aggregating blocks having continuous addresses as a continuous region; a reading unit configured to read the first firmware program stored by being divided in the storage device, in units of the continuous region from the start address to an end address determined by the size, based on the table created by the creating unit; and a writing unit configured to update a second firmware program stored in a non-volatile memory by the first firmware program read by the reading unit.

According to this aspect, the updating time can be shortened because the table indicating the start addresses and the sizes corresponding to the continuous regions in the first firmware program stored in the storage device is created, and the reading process is performed in accordance with the table.

In a case where a target of reading is a part of the first firmware program, the reading unit may read only blocks corresponding to the target of reading based on the table created by the creating unit. In this case, since only the blocks corresponding to the target of reading is read from among the continuous region, even a case where a part of the first firmware program is the target of reading can be dealt with.

The creating unit may omit the creation of a table by reusing the table that has already been created. In this case, the processing time period can be shortened, because the table that has already been created is reused.

A yet another aspect of the present invention is a writing method. This writing method includes the steps of: acquiring, from a storage device capable of storing a file by dividing the file into a plurality of blocks, managing information indicating an address of each block configuring the file; creating a table indicating a start address and a size of each continuous region by extracting the address of each block from the acquired managing information, and aggregating blocks having continuous addresses as a continuous region; reading data stored in a non-volatile memory; and dividing the data in units of the continuous region from the start address to an end address determined by the size, based on the created table, and writing the divided data to the storage device so as to maintain the address of each block configuring the file as indicated in the managing information.

A yet another aspect of the present invention is also a writing method. This writing method includes the steps of: acquiring, from a storage device storing a first firmware program by dividing the first firmware program into a plurality of blocks, managing information indicating an address of each block; creating a table indicating a start address and a size of each continuous region by extracting the address of each block from the acquired managing information, and aggregating blocks having continuous addresses as a continuous region; reading the first firmware program stored by being divided in the storage device, in units of the continuous region from the start address to an end address determined by the size, based on the created table; and updating a second firmware program stored in a non-volatile memory by the read first firmware program.

Note that, any combination of the above constituent features, and those in which an expression of the present invention is converted among methods, devices, systems, storage media, computer programs are also useful as aspects of the present invention.

### Advantageous Effects of Invention

According to the present invention, the process delay of reading and writing a file by the boot loader can be shortened.

### Brief Description of Drawings

FIG. 1 is a diagram showing a configuration of a processing device of a first embodiment of the present invention.
FIG. 2 is a diagram showing an outline of an ext2 file system in a HDD of FIG. 1.
FIG. 3 is a diagram showing an outline of an i-node table and block addresses in the HDD of FIG. 1.
FIG. 4 is a diagram showing a relationship in block addresses of a file and i-nodes in the HDD of FIG. 1.
FIG. 5 is a diagram showing a configuration of the HDD of FIG. 1.
FIG. 6 is a diagram showing a relationship between a read unit block number and a read time of the HDD of FIG. 1.
FIG. 7 is a diagram showing a configuration of a boot loader of FIG. 1.
FIG. 8 is a diagram showing an outline of continuous regions created in a creating unit of FIG. 7.
FIG. 9 is a diagram showing a table created in the creating unit of FIG. 7.
FIG. 10 is a conceptual diagram of adjustments of a start address and a size at a start and an end by a reading unit of FIG. 7.
FIG. 11 is a flowchart showing a write procedure by the boot loader of FIG. 7.
FIG. 12 is a flowchart showing a table creation procedure by the creating unit of FIG. 7.
FIG. 13 is a flowchart showing a block address extracting procedure by the creating unit of FIG. 7.
FIG. 14 is a flowchart showing a write procedure by a boot loader of a second embodiment of the present invention.
FIG. 15 is a flowchart showing a write procedure by a boot loader of a third embodiment of the present invention.
FIG. 16 is a flowchart showing a write procedure by a boot loader of a fourth embodiment of the present invention.
FIG. 17 is a flowchart showing a write procedure by a boot loader of a fifth embodiment of the present invention.
FIG. 18 is a flowchart showing a continuation from FIG. 17 of the write procedure by the boot loader.
FIG. 19 is a flowchart showing a write procedure by a boot loader of a sixth embodiment of the present invention.

### Description of Embodiments

### (First Embodiment)

Prior to specifically explaining the present invention, a summary thereof will be described. Embodiments of the present invention relate to a boot loader for updating a firmware program stored in a non-volatile memory by a firmware program stored in an HDD (Hard Disk Drive). Here, as an example, a file system to be used by the HDD is assumed to be ext2. In the ext2, the firmware program is stored by being divided into a plurality of blocks. Note that, the plurality of blocks may not be continuous. Although details thereof will be described later, in order to shorten a read time of the firmware program from the HDD, it is effective to reduce a repeating number of seek, and read continuous blocks at once.

On the other hand, since the boot loader does not predeterminedly identify block addresses of the firmware program stored in the HDD, i-nodes in which the block addresses are indicated need to be acquired. Since the i-nodes are stored dispersedly in the HDD, in a case of reading the firmware program while acquiring the block addresses from the i-nodes, it becomes difficult to read the continuous blocks at once. Due to this, it becomes difficult to increase reading speed. In order to cope with this, the boot loader of the embodiments performs the following processes.

The boot loader acquires the block addresses from the i-nodes prior to reading the firmware program, and creates a table related to continuous blocks (which are hereinbelow referred to as "continuous regions"). This table indicates a start address and a size of each of the continuous regions. The boot loader realizes a high-speed reading of the firmware program from the HDD by reading the continuous blocks at once with reference to the table.

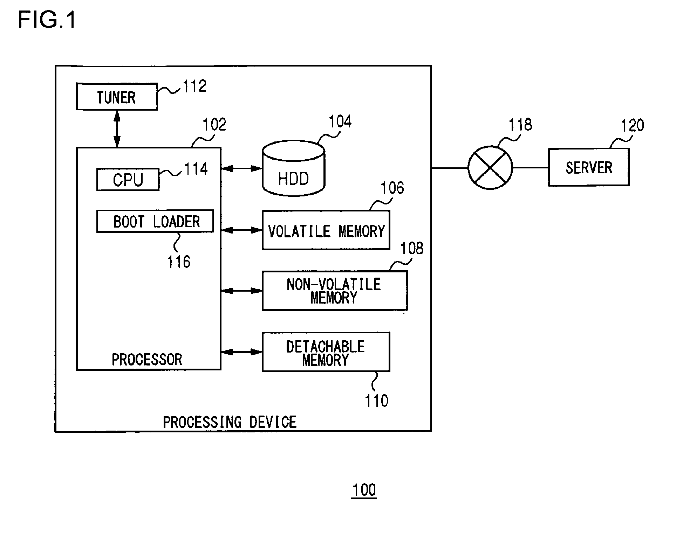

FIG. 1 shows a configuration of a processing device 100 according to a first embodiment of the present invention. The processing device 100 includes a processor 102, an HDD 104, a volatile memory 106, a non-volatile memory 108, a detachable memory 110, and a tuner 112. Further, the processor 102 includes a CPU (central processing unit) 114 and a boot loader 116. Further, the processing device 100 is connected to a server 120 via a network 118.

The processor 102 is implemented by an integrated circuit and the like. Aside from the CPU 114 and the boot loader 116, the processor 102 combines various types of drivers and dedicated processing modules. The processor 102 is capable of accessing various types of devices and media. The non-volatile memory 108 is a FLASH ROM, an EEPROM and the like, and stores programs to be processed by the CPU 114. Further, the non-volatile memory 108 stores a firmware program. The volatile memory 106 is a memory for actual processing configured of an SDRAM and the like. The CPU 114 can process a program by the boot loader 116 reading the program from the non-volatile memory 108 to the volatile memory 106 and activating the same. Note that, the process by the boot loader 116 can be divided by stages, and thus a part thereof may be included in the program.

The tuner 112 is a module capable of receiving BS/CS/ground wave digital/ground wave analog broadcasts, and outputs received data in accordance with a control by the processor 102. The HDD 104 stores various types of programs, the data received by the tuner 112 and the like. Here, the HDD 104 stores a firmware program of a newer version than the firmware program stored in the non-volatile memory 108. The processor 102 includes a driver of the detachable memory 110, and can read and write data from and to the detachable memory 110. Further, the processor 102 includes a driver for communication, and communicates with a remote server 120 via the network 118 such as the Internet, an intranet and the like.

Generally, programs such as the firmware program are written in the non-volatile memory 108 upon shipping from a manufacturing factory. After the shipping, program updates are performed in a usage environment for a user for the purpose of correcting program contents and improving performance thereof. An example of the program updates is an update by on-air downloading using satellite broadcasting. Here, similar to a TV program guide, update data of the program is downloaded by the tuner 112, and the program update is performed after having stored the data. Similarly, as a method of downloading from a remote source, the program update may be performed after the update data of the program is downloaded from the remote server 120 through the network 118, and the data is stored. Further, as another method, data stored in the detachable memory 110 may be copied, and the program update may be performed after storing the data.

In the present embodiment, an update of the firmware program is a target of the program update. Processes of the update of the firmware program is categorized into a process for acquiring and storing the update data (hereinbelow referred to as "accumulating process"), and a process of reading the stored update data and writing the same to the non-volatile memory 108 (hereinbelow referred to as "writing process"). As described earlier, the update data is stored in the HDD 104. Since the accumulating process is performed during an operation of an application program such as the on-air downloading and the downloading via the network 118, the accumulating process itself is performed by the application program. The data copy from the detachable memory 110 can also be simply performed by copying files during the operation of the application program. Thus, an accumulating process by the application program is suitable.

On the other hand, although the writing process can also be implemented by the application program, the application program is included in the update data. Due to this, if a power failure or an erroneous unplugging by a user happens during writing, there is a risk that an OS (Operating System) or the application program cannot be activated normally upon a subsequent activation. As a result, a retry of the writing becomes impossible, and recovery may forever be impossible. Due to this, the process of reading the stored update data and writing the same to the non-volatile memory 108 is desirably performed by the boot loader 116 that does not depend on the OS or the application. Note that, in the case of the boot loader 116 performing the writing process, a rebooting process is accompanied between the writing process and the process of acquiring and accumulating the update data that is a pre-process, and thus a place for accumulating the data needs to have a capacity that is not volatile and can store the software program for the update. Due to this, the HDD 104 is suitable as the place for storage of the software program for the update.

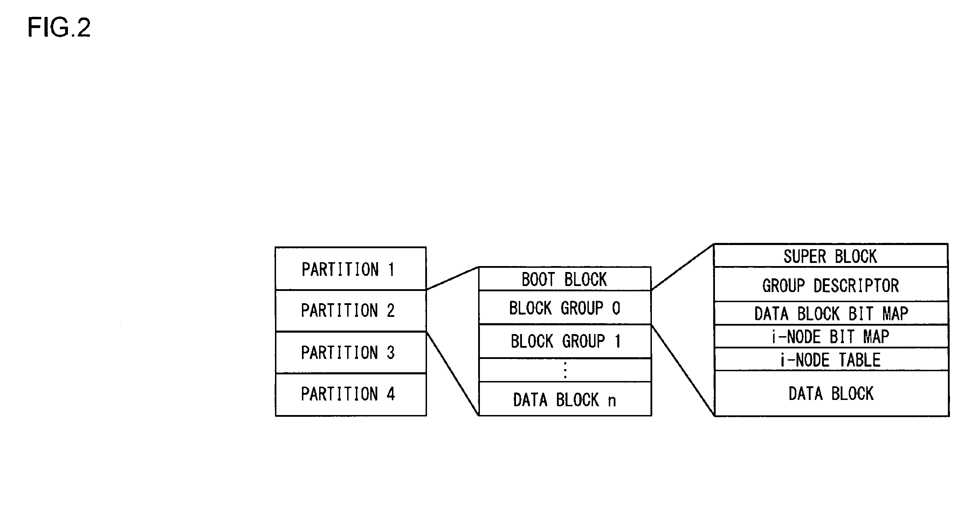

FIG. 2 shows an outline of an ext2 file system in the HDD 104. In a case of using Linux as the OS, ext2 is often used as a block file system. The ext2 is developed from a Fast File System, and is based on "block managing algorithm" that had traditionally been used in UNIX^{™}. In the ext2, a block unit is configured by one of 1024, 2048, and 4096 bytes, and a plurality of blocks is managed collectively as a "block group". In FIG. 2, a configuration of the block group is shown. A left side of FIG. 2 shows partitions formed in the HDD 104 of FIG. 1, and a center of FIG. 2 shows a layout of an ext2 partition. A right side of FIG. 2 shows a layout in the block group in further detail. Here, a super block refers to managing information related to the file system, a group descriptor refers to information within a group, and a data block bit map refers to information of datablocks. Further, an i-node table stores i-nodes that retain information related to file/directory, and the data blocks retain actual data.

After acquiring the file system information from the information of the super block and the group descriptor, the boot loader 116 of FIG. 1 searches in a directory entry, and acquires i-node table information corresponding to a target file. Actual reading of the data in the file becomes possible by obtaining a memory address of a data block based on the i-node table. A size of the data block is one of 1024, 2048, and 4096 bytes, similar to other blocks. For referencing a file whose data block size is 2048 bytes and file size is 200 Kbytes, 100 data blocks become necessary. However, in a case of retaining 100 addresses for 100 data blocks, information volume is increased. Thus, in the ext2, indirect blocks are created so as to effectively use an address range, and reference by indirect pointers can be performed.

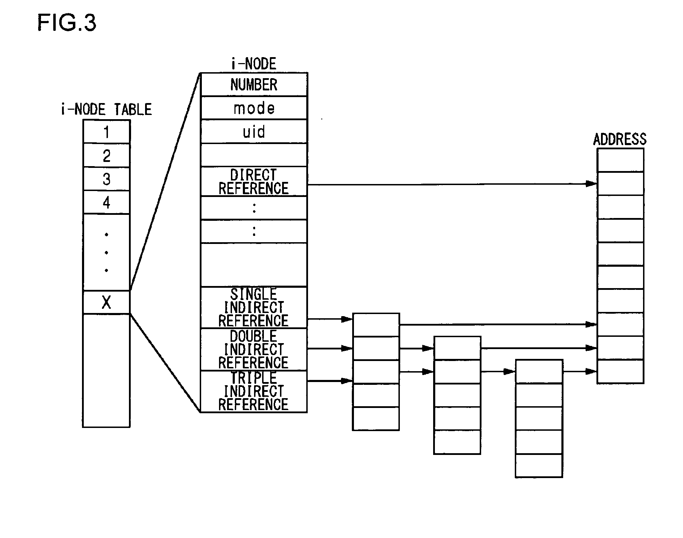

FIG. 3 shows an outline of the i-node table and the block addresses in the HDD 104. An array for data block reference included in an i-node is 15, and in the ext2, 12 of these are used for "direct reference" , and remaining 3 are respectively used for "single indirect reference", "double indirect reference", and "triple indirect reference". Due to this, a file with a large volume requiring a plurality of data blocks is efficiently handled in the ext2. File sizes that can be expressed in the respective reference methods according to calculation are as follows. A calculation formula for the direct reference is "block size x 12". In cases where the block size is 1024 bytes, 2048 bytes, and 4096 bytes, the respective file sizes are 12 Kbytes, 24 Kbytes, and 48 Kbytes.

In the single indirect reference, "block size ÷ 4" pieces can be used for the indirect reference. This corresponds to a size [bytes] of a block pointer. Due to this, when it is converted into a file size, the file size becomes "block size ÷ 4 * block size". In the cases where the block size is 1024 bytes, 2048 bytes, and 4096 bytes, the respective file sizes are 256 Kbytes, 1 Mbytes, and 4 Mbytes. In the double indirect reference, the conversion to the file size results in "((block size ÷ 4)²) × block size". Due to this, in the cases where the block size is 1024 bytes, 2048 bytes, and 4096 bytes, the respective file sizes are 64 Mbytes, 512 Mbytes, and 4 Gbytes. In a case where the file size of the update program to be written to the non-volatile memory 108 of FIG. 1 is several tens to hundreds Mbytes, the use of the double indirect reference is preferable.

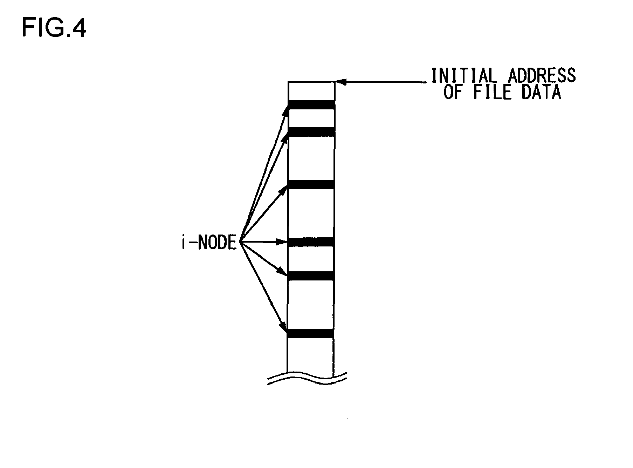

FIG. 4 shows a relationship of a file and the i-nodes in the HDD 104 on the block addresses. In the HDD 104, the i-nodes are not stored in a collective region, but are formed within data blocks. Due to this, in the case of using the indirect reference, continuity in data of source files is lost. This is because in order to reduce seek of a disk head upon reading the i-node and a data block corresponding thereto, a kernel tries to allocate the i-node in the same group as the data block. In a case where an address expression is 4 bytes, a number of addresses that can be stored in one block becomes "block size ÷ 4". That is, all of the addresses cannot be expressed unless an i-node is inserted into data at least once every "block size ÷ 4". For example, in the case of 2048 bytes, all of the addresses cannot be expressed unless an i-node is inserted at least once every 512 bytes. In practice, the i-nodes are inserted not necessarily every 512 bytes, but irregularly at a smaller interval. Further, since a position of the file and a position of the i-node included therein are updated every file generation, specifying the same becomes difficult. That is, even if a block address including initial data of a file is extracted, the boot loader 116 in FIG. 1 cannot continuously read blocks, so block addresses of data need to be read by performing the reference in block units.

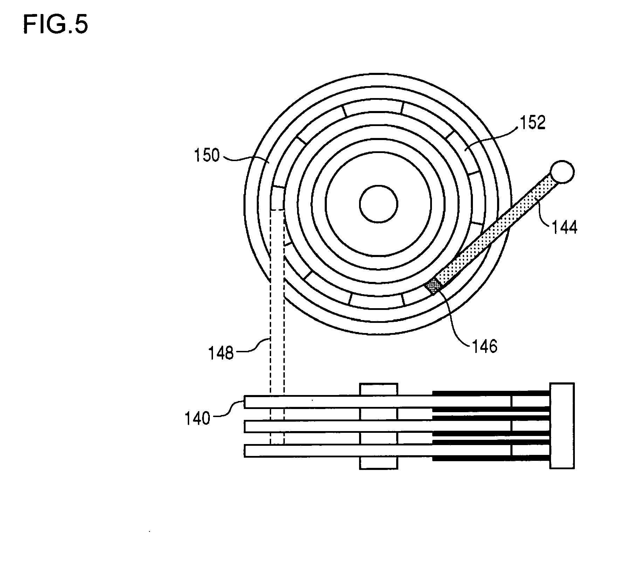

FIG. 5 shows a configuration of the HDD 104. Regions called sectors 152 as units of reading and writing data are formed in tracks 150 formed concentrically. Access to the data is performed by a magnetic head 146 being moved on a disk 140 by a swing arm 144. This operation is called seek, and a time required therefor is called seek time. No seek time is required within the same cylinder 148 and only a rotation-waiting time is required. However, in a case of accompanying the seek, the seek time needs to be considered. Generally, a data read time of the HDD 104 is calculated by " (average seek time + average rotation-waiting time + data transfer time) × (number of seek repetition)". Here, a relationship of: data transfer time << (average seek time + average rotation-waiting time) is established. Thus, an overall data read time becomes shorter as the "number of seek repetition" is smaller. Further, in a case of reading a file with a size exceeding one track 150, the data read time is shortened by reading continuous addresses at once, because the access thereof can be performed not by a long seek but by a one-track jump.

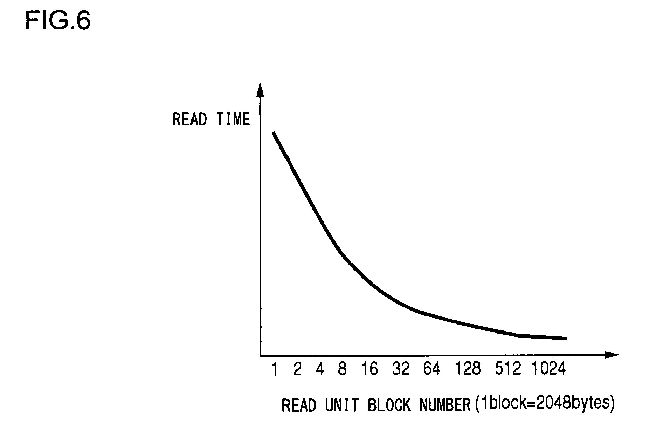

FIG. 6 shows a relationship of the read unit block number of the HDD 104 and the read time. This is a result of measurement of the read time of data of 128 Mbytes while changing the access unit. The read time significantly decreases as the read unit block number is increased with respect to the read in one block unit, and is saturated near 128M bytes.

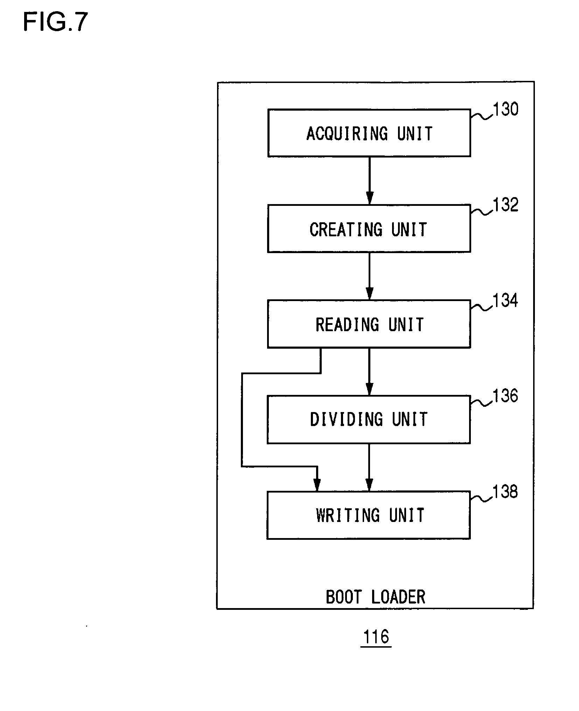

FIG. 7 shows a configuration of the boot loader 116. The boot loader 116 includes an acquiring unit 130, a creating unit 132, a reading unit 134, a dividing unit 136, and a writing unit 138. The acquiring unit 130 analyzes the super block configured in the ext22 file system in the HDD 104 of FIG. 1 and acquires necessary information such as the block size. The acquiring unit 130 analyzes the group descriptor, and acquires necessary information such as i-node table IDs. The acquiring unit 130 searches the directory entry, and acquires i-node information of an update file.

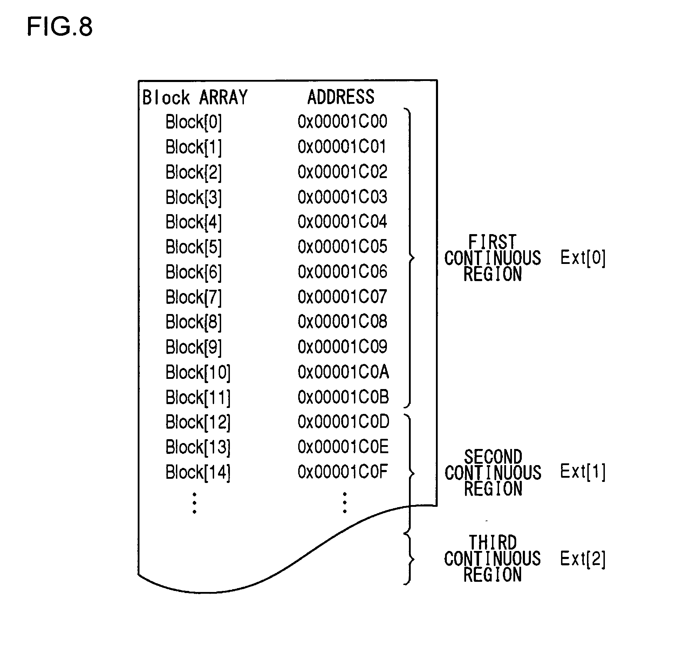

The creating unit 132 acquires managing information in which an address of each block is expressed from the HDD 104 in which the firmware program for the update is stored while being divided in a plurality of blocks. The creating unit 132 extracts the block address corresponding to each block within the file by using the acquired managing information, that is, the i-node table information and the indirect reference. The creating unit 132 aggregates the blocks having continuous block addresses as a continuous region. FIG. 8 shows an outline of the continuous regions generated in the creating unit 132. Here, the relationship in the block addresses, and the table showing start addresses and sizes of the continuous regions will be supplemented. FIG. 8 expresses all of the blocks within the file in an array, and indicates correspondences with the respective block addresses. Although the block addresses are continuous from Block [0] to Block [11] that are direct references, the block address is shifted by one from Block [12]. This is because 0x00001C0C is not present due to being used for the indirect reference of an i-node. The description returns to FIG. 7.

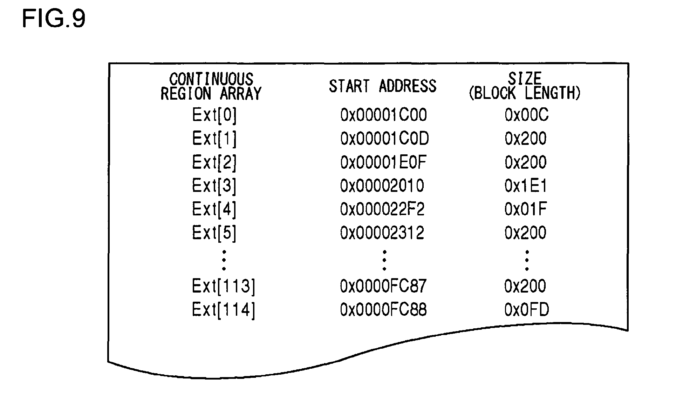

Further, the creating unit 132 creates a table indicating the start address and size for each of the continuous regions. The table may be configured as an array in the volatile memory 106 of FIG. 1, or may be stored in the HDD 104 or the non-volatile memory 108. FIG. 9 shows a table created by the creating unit 132. A first continuous region is the range from Block [0] to Block [11] of FIG. 8, and the corresponding start address and size are the values shown in the first line of FIG. 9. The same applies to a second continuous region and so on. As a result, the table as in FIG. 9 is created. The size of the table of FIG. 9 is much smaller than the size of the table of FIG. 8. For example, in the case where the file size of the firmware program is several tens to hundreds Mbytes and the block size is 2048 bytes, an implementation by double indirect reference is possible, where the table size is roughly estimated to be 1/ (2048/4) = 1/512. Due to this, a resource for retaining the table can significantly be reduced compared to the case of retaining the table of FIG. 8. The description returns to FIG. 7.

The reading unit 134 reads the firmware program for the update stored by being divided in the HDD 104 in units of the continuous region from the start address over the size. That is, the reading unit 134 collectively reads a plurality of blocks included in the continuous region. The reading unit 134 temporarily stores the read firmware program in the volatile memory 106. At this occasion, if a part of the firmware program for the update is to be cut out, a start and an end of the part to be cut out may not necessarily be demarcations of the continuous region. In such a circumstance, the reading unit 134 predeterminedly detects in which of the continuous regions the start and the end are included, and adjusts the start addresses and the sizes.

For example, in a case where a block in the midst of the continuous region is the start, the start address is shifted toward a rear side to the block corresponding to the start. Further, the same applies to the end. That is, in the case where a part of the firmware program for the update is the target of reading, the reading unit 134 reads only the blocks corresponding to the target of reading based on the table created by the creating unit 132. The writing unit 138 reads the firmware program for the update from the volatile memory 106, and writes the same to the non-volatile memory 108. That is, the writing unit 138 updates the firmware program that had been stored in the non-volatile memory 108 until then by the firmware program for the update read by the reading unit 134. Note that, the dividing unit 136 does not operate in the first embodiment.

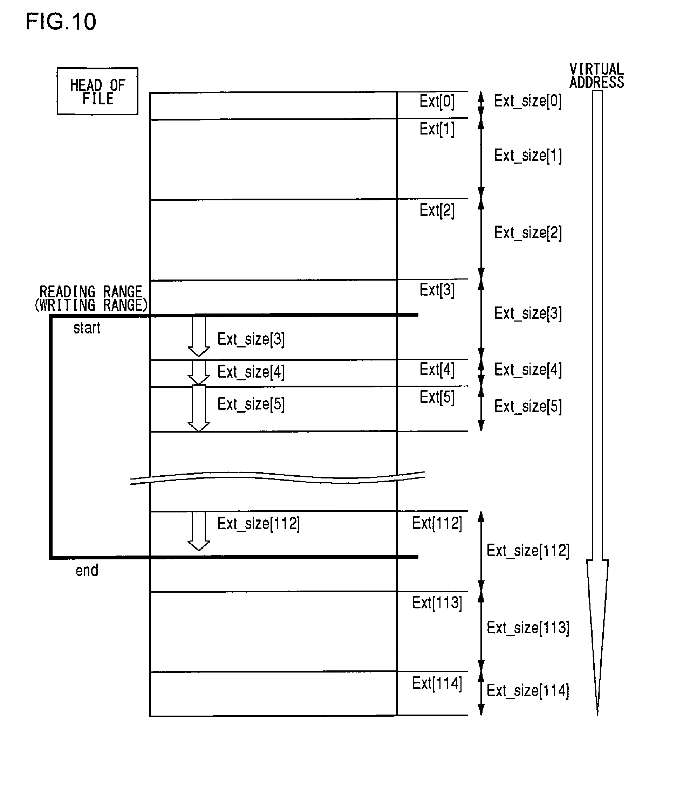

In the case of reading and writing a part of the data in the file, the demarcations of the continuous regions in the table of FIG. 9 may not necessarily be the start and the end. Thus, such a circumstance is dealt with by detecting which ones of the continuous regions include the start and the end prior to starting the reading and writing, and adjusts the respective start addresses and the sizes. FIG. 10 is a conceptual diagram of the adjustment of start addresses and sizes regarding the start and the end by the reading unit 134. In order to perform the adjustment of the start addresses and sizes regarding the start and the end, firstly, as shown in the right side of FIG. 10, the continuous regions are connected in order, and virtual addresses are created (in practice, they differ from the actual addresses because i-nodes are intervened in between). In the process, a detection on whether 'start' indicating a start position (with reference to a file start criteria) and 'end' indicating an end position of read target data exist in a virtual address of each of the continuous regions or not is performed. As shown in the drawing, the region surrounding the start and the end by a bold line is the data that is intended to be read. Since the start position at this time is included in Ext[3], a correction becomes possible by shifting the start address toward the rear side and making the size smaller for the Ext [3]. Similarly, as for the end position, since it is included in Ext [112], the correction becomes possible by making the size smaller for the Ext [112].

This configuration can be implemented in terms of hardware resource by a CPU, a memory, or other LSI of any computer, and be implemented in terms of software resource by program loaded to the memory and the like. However, functional blocks implemented by the cooperation of the above are depicted herein. Accordingly, it canbe understood by those skilled in the art that these functional blocks can be implemented in various ways such as only by the hardware, only by the software, or by a combination thereof.

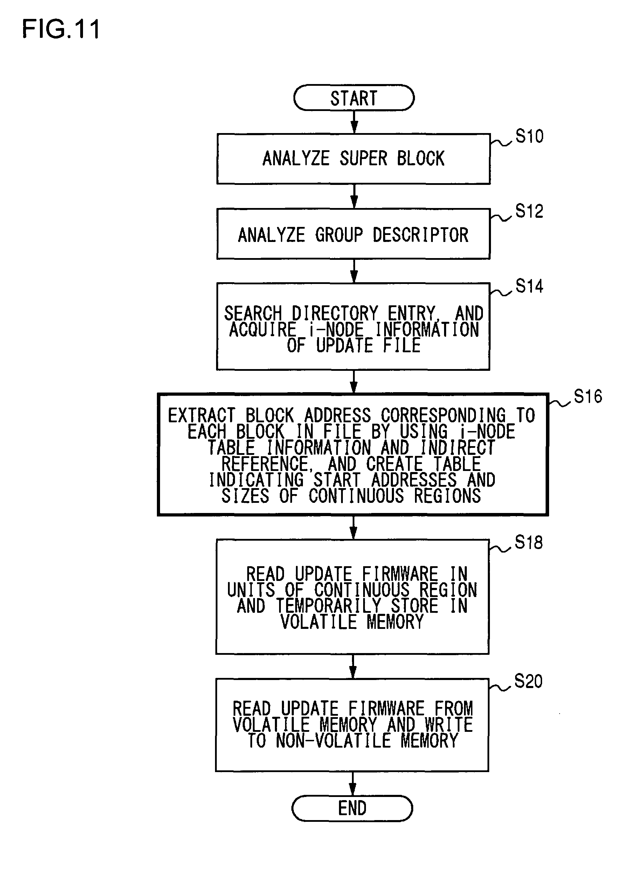

The operation of the boot loader 116 having the above configuration will be explained. FIG. 11 is a flowchart showing a write procedure by the boot loader 116. The acquiring unit 130 analyzes the super block configured in the ext2 file system (S10), and acquires the necessary information such as the block size. The acquiring unit 130 analyzes the group descriptor (S12), and acquires the necessary information such as the i-node table IDs. The acquiring unit 130 searches the directory entry, and acquires the i-node information of the update file (S14).

The creating unit 132 extracts the block address corresponding to each block in the file by using the information of the i-node table and the indirect reference, and creates the table indicating the start addresses and sizes of the continuous regions (S16). The reading unit 134 reads the update firmware from the HDD 104 in the units of the continuous region, and temporarily stores the same in the volatile memory 106 (S18). The writing unit 138 reads the update firmware from the volatile memory 106, and writes the same to the non-volatile memory 108 (S20).

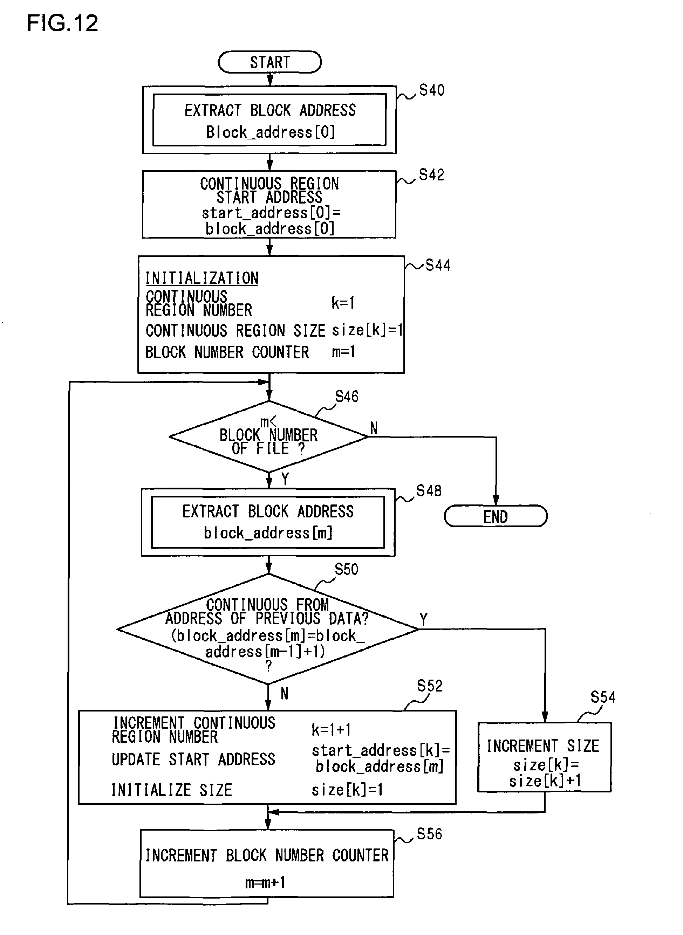

FIG. 12 is a flowchart showing a table creation procedure by the creating unit 132. The creating unit 132 extracts an initial block address positioned at a head of the file (S40). The creating unit 132 inputs a value of the extracted initial block address in the start address of the continuous region (S42). The creating unit 132 initializes parameters (continuous region number, continuous region size, and block number counter) (S44). If the block number counter m does not exceed the block size (Y to S46), the creating unit 132 extracts a block address (S48).

The creating unit 132 checks whether the block address is sequential with the block address of the previous data. When they are sequential (Y in S50), only the size is increased (S54) . When they are not sequential (N in S50), the creating unit 132 increments the continuous region number, updates the start address by the block address that is being the current target, and initializes the size (1) (S52). The creating unit 132 returns to the step S46 after incrementing the block number counter (S56). The process ends when the block number counter m exceeds the block size (N in S46).

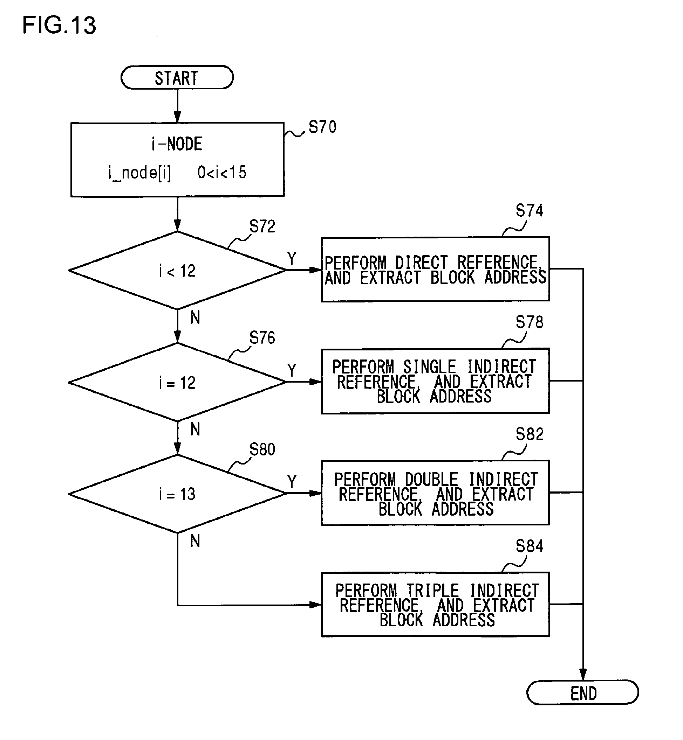

FIG. 13 is a flowchart showing a block address extracting procedure by the creating unit 132. This corresponds to the extraction of the block addresses in the step 40 and the step 48 in FIG. 12. Although extraction of a target i-node is possible from the i-node table shown in FIG. 3 by the i-node information acquired in the step 14 of FIG. 11, in order to clarify the explanation, the one therein from which reference information is taken out will be termed i_node[i] 0 < i < 15 (S70). If i < 12 (Y in S72), the creating unit 132 performs the direct reference and extracts block addresses (S74). If the formula i<12 is not satisfied (N in S72), and the equation i = 12 is satisfied (Y in S76), the creating unit 132 extracts a block address by performing the single indirect reference (S78). If the equation i = 12 is not satisfied(N in S76), and the equation i = 13 is satisfied (Y in S80), the creating unit 132 extracts a block address by performing the double indirect reference (S82). If the equation i = 13 is not satisfied (N in S80), that is, the equation i = 14 is satisfied, the creating unit 132 extracts a block address by performing the triple indirect reference (S84).

According to the embodiment of the present invention, the table indicating the start addresses and sizes corresponding to the continuous regions in the update firmware program stored in the HDD is created, and the read process is performed in accordance with the table, so the updating time of the firmware program can be shortened. Further, since the table is created, the updating time can be shortened even in the case where the boot loader that does not have a file system updates the firmware program stored in the non-volatile memory. Further, since the read size from the HDD nears "block size ÷ 4", the reading can be performed at a high speed. Further, even when a file rearrangement is performed in the file system, an influence to performance can be reduced by flexibly following the rearrangement. Further, since information volume of the table of the continuous regions is smaller than information volume of the table of the block addresses, process efficiency can be improved.

### (Second Embodiment)

The second embodiment of the present invention relates to a boot loader for writing a firmware program, similar to the first embodiment. On the other hand, differently from the first embodiment, the second embodiment corresponds to a case of temporarily storing the firmware program that is stored in the non-volatile memory in the HDD. Here, the temporary storage to the HDD is performed for the purpose of a backup of the firmware program. That is, in the second embodiment and the first embodiment, the storage medium from which the firmware program is to be read and the storage medium to which the firmware program is to be written become opposite. A processing device 100 of the second embodiment is the same type as that of FIG. 1, and a boot loader 116 of the second embodiment is the same type as that of FIG. 7. Here, the differences from the first embodiment will mainly be explained.

Note that, in a HDD 104, a firmware program for backup, or a file having a same size as the firmware program to be backed up is stored by an application program and the like in a file system. An acquiring unit 130 analyzes a super block and group descriptor of the HDD of FIG. 1. Further, the acquiring unit 130 searches a directory entry, and acquires i-node information already stored in the HDD 104.

A creating unit 132 acquires managing information that indicates an address for each block from the HDD 104 that can store files such as a backup firmware and the like by dividing the same into a plurality of blocks. The creating unit 132 extracts a block address corresponding to each block in the file by using the information of the i-nodes and the indirect reference. The creating unit 132 aggregates blocks having continuous block addresses as a continuous region. The creating unit 132 creates a table indicating a start address and a size of each of the continuous regions. The reading unit 134 reads the firmware program stored in a non-volatile memory 108, and temporarily stores in a volatile memory 106. The read firmware program is the firmware program to be backed up.

A dividing unit 136 divides the firmware program stored in the volatile memory 106. Further, the dividing unit 136 aggregates the divided plurality of blocks so as to adapt to the continuous regions aggregated in the creating unit 132. By such a process, the firmware program is divided into a plurality by corresponding to each of the continuous regions created in the creating unit 132. The writing unit 138 writes the firmware program divided by the dividing unit 136 to the HDD 104 for each of the continuous regions from the start address over the size based on the table created by the creating unit 132. That is, the firmware program divided into a plurality of programs is written to the HDD 104 so as not to change the addresses of the continuous regions. As a result, the block addresses indicated by the managing information such as the i-node table are not changed. Writing the firmware program to the HDD 104 corresponds to backing the firmware program up.

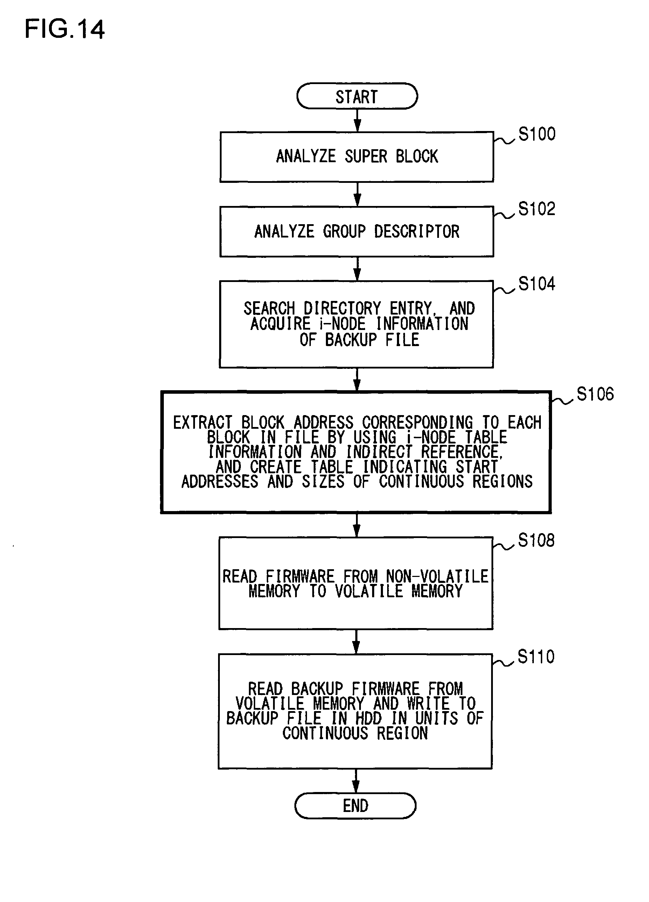

FIG. 14 is a flowchart showing a write procedure by the boot loader 116 of the second embodiment of the present invention. The acquiring unit 130 performs analysis of the super block configured in an ext2 file system (S100), and acquires necessary information such as the block size. The acquiring unit 130 performs analysis of the group descriptor (S102), and acquires necessary information such as i-node table IDs. The acquiring unit 130 searches the directory entry, and acquires the i-node information of the backup file (S104).

The creating unit 132 extracts the block addresses corresponding to the respective blocks in the file by using the information of the i-node table and indirect reference, and creates a table indicating the start addresses and sizes of the continuous regions (S106). The reading unit 134 reads the firmware from the non-volatile memory 108 to the volatile memory 106 (S108). The writing unit 138 reads the backup firmware from the volatile memory 106, and writes the same to the backup file in the HDD 104 in units of the continuous region (S110).

According to the embodiment of the present invention, the table indicating the start addresses and sizes corresponding to the continuous regions is created for the file having the same size that is predeterminedly created by an application program and the like, and the write process is performed in accordance with the table, so a backup time can be shortened. Further, since the write process is performed in accordance with the table, the writing process can be performed at a high speed even upon storing the backup data in the HDD. Further, since the write process is performed in accordance with the table, it can coexist with processes of the application program that uses the file system. Further, although writing of files by the boot loader that does not have a file system is difficult, the writing is performed by using the block addresses of the file having the same size as previously arranged. Thus, the coexistence with the process of the application program in the file system can be implemented.

Note that, in the above description, although cases in which the dividing unit 136 and the writing unit 138 are separated have been explained, in an actual implementation, it goes without saying that the implementation may employ preparing an API (Application Program Interface) that transfers (copies) data between the volatile memory 106 and the HDD 104, or a function, and shifting an address to be designated.

### (Third Embodiment)

The third embodiment of the present invention corresponds to a case of performing the operation of the first embodiment subsequent to the operation of the second embodiment. That is, the third embodiment corresponds to a case of using the backup file stored in an HDD by the operation of the second embodiment, and updating a firmware program of a non-volatile memory. Such an update of the firmware program can be said as being a recovery of the firmware program. A processing device 100 of the third embodiment is the same type as that of FIG. 1, and a boot loader 116 of the third embodiment is the same type as that of FIG. 7. Here, the differences from the first embodiment will mainly be explained.

In an HDD 104, a backup firmware program is stored in a file system by a processing of the second embodiment. An acquiring unit 130 analyzes a super block and a group descriptor configured in an ext2 file system in the HDD 104 in FIG. 1. The acquiring unit 130 searches a directory entry, and re-acquires i-node information of the backup file. That is, the acquiring unit 130 re-acquires managing information indicating an address of each block from the HDD 104 in which the backup firmware program is stored in a plurality of blocks.

A creating unit 132 extracts the block address corresponding to each block in the backup firmware program by using the managing information acquired by the acquiring unit 130, that is, the information of the i-node table and the indirect reference. The creating unit 132 aggregates blocks having continuous block addresses as a continuous region. The creating unit 132 re-creates a table indicating the start address and the size of each continuous region. A reading unit 134 reads the backup firmware program stored by being divided in the HDD 104 in the units of the continuous region from the start address over the size based on the table re-created by the creating unit 132. The reading unit 134 temporarily stores the read firmware program to the volatile memory 106.

A writing unit 138 reads the backup firmware program from the volatile memory 106 and writes the same to the non-volatile memory 108. That is, the writing unit 138 recovers the firmware program that had been stored until then in the non-volatile memory 108 by the backup firmware program read by the reading unit 134. Note that, a dividing unit 136 is not operated in the third embodiment.

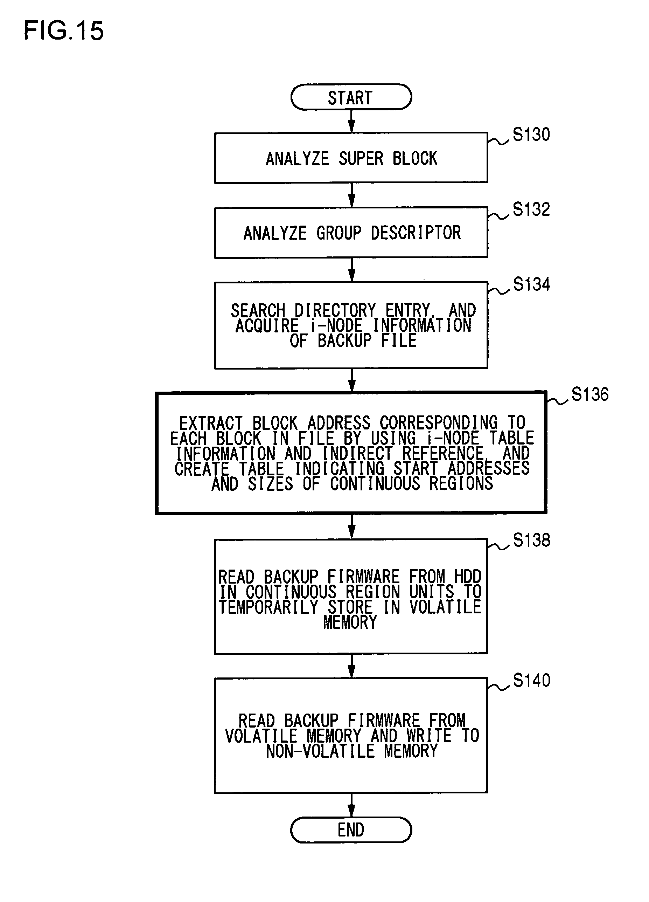

FIG. 15 is a flowchart showing a write procedure by a boot loader 116 of the third embodiment of the present invention. The acquiring unit 130 analyzes the super block configured in the ext2 file system (S130), and acquires necessary information such as the block size. The acquiring unit 130 analyzes the group descriptor (S132), and acquires necessary information such as i-node table IDs. The acquiring unit 130 searches a directory entry, and acquires i-node information of an update file (S134).

The creating unit 132 extracts the block address corresponding to each block in the file by using the information of the i-node table and the indirect reference, and creates a table indicating start addresses and sizes of continuous regions (S136). The reading unit 134 reads the backup firmware in the units of the continuous region from the HDD 104, and temporarily stores the same to the volatile memory 106 (S138). The writing unit 138 reads the backup firmware from the volatile memory 106 and writes the same to the non-volatile memory 108 (S140).

According to the embodiment of the present invention, a recovery time of the firmware program can be shortened because the table indicating the start addresses and sizes corresponding to the continuous regions in the update firmware program stored in the HDD is created, and the reading process is performed in accordance with the table. Further, the recovery time can be shortened even in the case where the boot loader that does not have a file system updates the firmware program stored in the non-volatile memory.

### (Fourth Embodiment)

Similar to the second embodiment, the fourth embodiment of the present invention corresponds to the case of temporarily storing a firmware program in an HDD that had been stored in a non-volatile memory. In the fourth embodiment, file information is updated upon storing the firmware program in the HDD. A processing device 100 of the fourth embodiment is the same type as that in FIG. 1, and a boot loader 116 in the fourth embodiment is the same type as that in FIG. 7. Here, the differences from the above-described embodiments will mainly be explained.

Similar to the second embodiment, a writing unit 138 writes the firmware program that is divided by a dividing unit 136 to an HDD 104 in units of continuous region from a start address over a size based on a table created by a creating unit 132. At this occasion, the writing unit 138 updates at least one of an attribute, a file name, and an update time among file information to be written to the HDD 104.

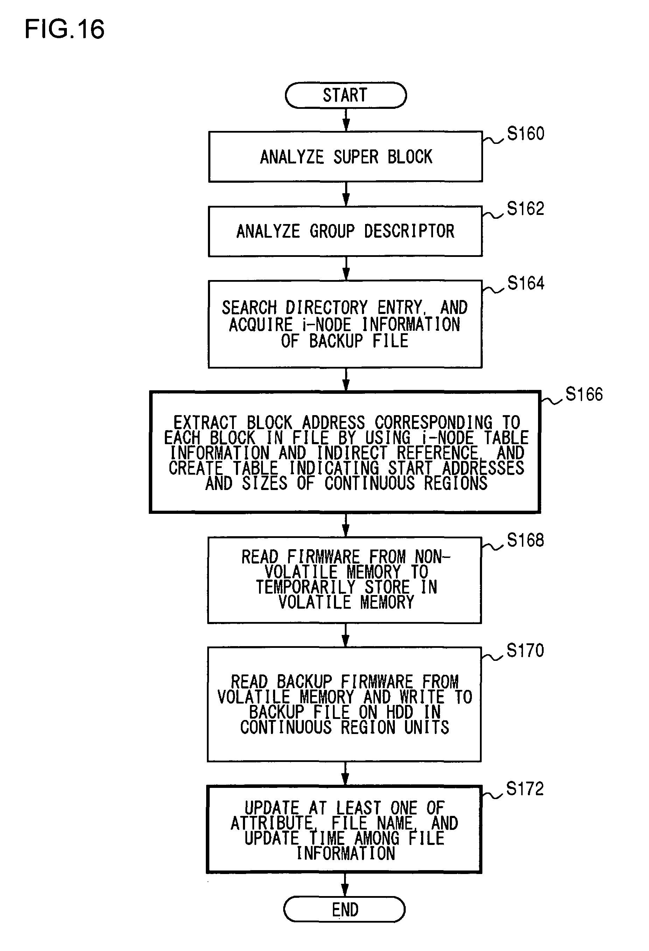

FIG. 16 is a flowchart showing the write procedure by the boot loader 116 of the fourth embodiment of the present invention. The step 160 to the step 170 of FIG. 16 are identical to the step 100 to the step 110 of FIG. 14. The writing unit 138 updates at least one of the attribute, the file name, and the update time among the file information (S172).

According to the embodiment of the present invention, since at least one of the attribute, the file name, and the update time is updated, a proof that the update has been completed can be marked. Further, of the file information, by updating at least one of the attribute, the file name, and the update time, the update can be confirmed from an application program because data on the file system is thereby updated.

### (Fifth Embodiment)

The fifth embodiment of the present invention corresponds to a case of making the table used in the second embodiment and the table used in the third embodiment common. That is, the fifth embodiment relates to making the table common in the case of temporarily storing the firmware program stored in the non-volatile memory as a backup file in the HDD, and the case of updating the firmware program stored in the non-volatile memory by using the backup file temporarily stored in the HDD. By such a process, a time for creating the table can be reduced. A processing device 100 of the fifth embodiment is the same type as that in FIG. 1, and a boot loader 116 in the fifth embodiment is the same type as that in FIG. 7. Here, the differences from the above-described embodiments will mainly be explained.

Similar to the second embodiment, upon storing a firmware program stored in a non-volatile memory 108 in a HDD 104, an acquiring unit 130 confirms whether an already-created table is stored in the HDD 104 or the non-volatile memory 108. If the table is not stored, the acquiring unit 130 and a creating unit 132 create a table by performing similar processes as those in the second embodiment. On the other hand, if the table is stored, the acquiring unit 130 and the creating unit 132 omit the process of the second embodiment, a reading unit 134 reads the firmware program stored in the non-volatile memory 108, and stores the same in a volatile memory 106.

Similar to the third embodiment, upon storing a backup firmware program stored in the HDD 104 to the non-volatile memory 108, the acquiring unit 130 confirms whether an already-created table is stored in the HDD 104 or the non-volatile memory 108. Here, the table simply needs to have been created in the past upon storing the firmware program stored in the non-volatile memory 108 to the HDD 104, or upon storing the firmware program stored in the HDD 104 to the non-volatile memory 108. If the table is not stored, the acquiring unit 130 and the creating unit 132 create a table by performing similar processes as those in the third embodiment. On the other hand, if the table is stored, the acquiring unit 130 and the creating unit 132 omit the process of the third embodiment, a reading unit 134 reads the backup firmware program stored by being divided in the HDD 104 in units of continuous region from the start address over the size based on the stored table. Accordingly, the creating unit 132 omits the creating process of the table by reusing the already-created table.

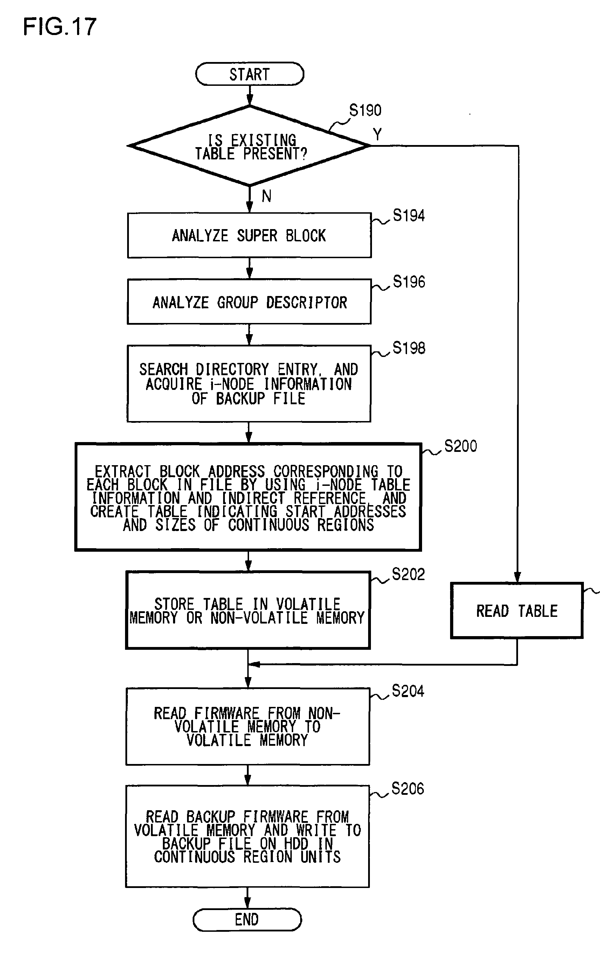

FIG. 17 is a flowchart showing a write procedure by a boot loader 116 of the fifth embodiment of the present invention. If there is an existing table (Y in S190), the reading unit 134 reads the table (S192). If there is no existing table (N in S190), the acquiring unit 130 analyses the super block (S194). The step 194 to the step 206 are identical to the step 100 to the step 110 of FIG. 14.

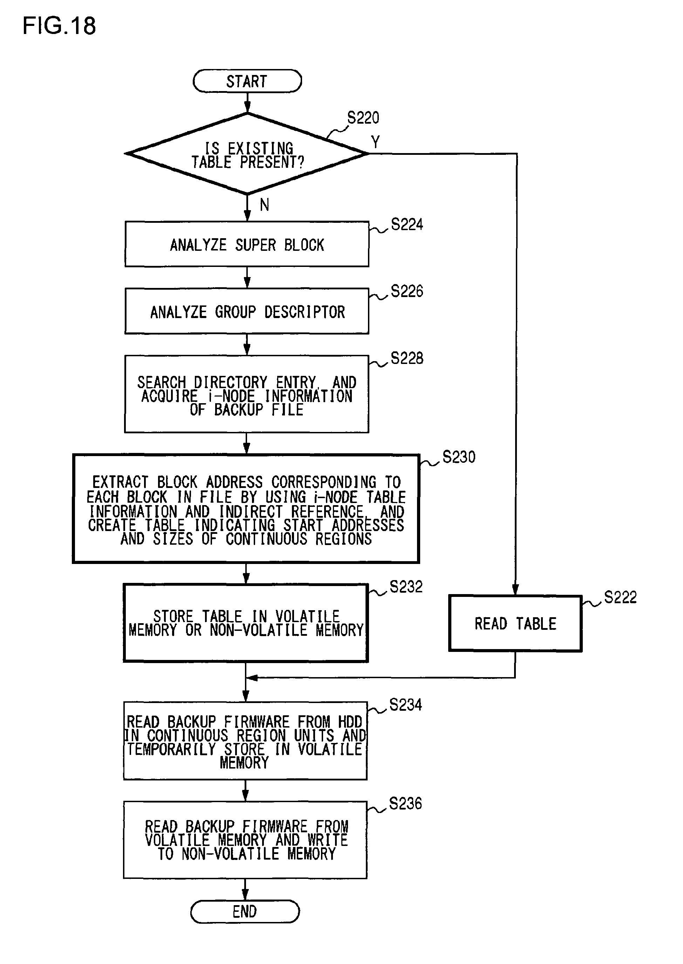

FIG. 18 is a flowchart showing the write procedure by the boot loader 116 continued from FIG. 17. If there is an existing table (Y in S220), the reading unit 134 reads the table (S222). If there is no existing table (N in S220), the acquiring unit 130 analyses the super block (S224). The step 224 to the step 236 are identical to the step 130 to the step 140 of FIG. 15.

According to the embodiment of the present invention, by making the tables common, an update processing time of backup data can be shortened, and a recovery processing time using the backup data can also be shortened. Further, since the existing tables are read, a time for creating the tables can be reduced. Further, since the existing tables are read, a processing amount can be reduced.

### (Sixth Embodiment)

The sixth embodiment of the present invention corresponds to a case of using an already-created table without creating a new table in the event where the table had already been created in the first embodiment. A processing device 100 of the sixth embodiment is the same type as that in FIG. 1, and a boot loader 116 in the sixth embodiment is the same type as that in FIG. 7. Here, the differences from the above-described embodiments will mainly be explained.

Similar to the first embodiment, upon storing an update firmware program stored in an HDD 104 to a non-volatile memory 108, an acquiring unit 130 confirms whether an already-created table is stored in the HDD 104 or the non-volatile memory 108. If the table is not stored, the acquiring unit 130 and a creating unit 132 create a table by performing similar processes as those in the first embodiment. On the other hand, if the table is stored, the acquiring unit 130 and the creating unit 132 omit the process of the first embodiment, a reading unit 134 reads the update firmware program stored by being divided in the HDD 104 in units of continuous region from a start address over a size based on the stored table. Note that, even if the table is stored, the acquiring unit 130 checks a created time of the table, and if the table was made prior to a predetermined period, the acquiring unit 130 and the creating unit 132 may perform similar processes as those in the first embodiment. That is, simply the aforesaid table may be used only in the case where the table is newer than the predetermined period.

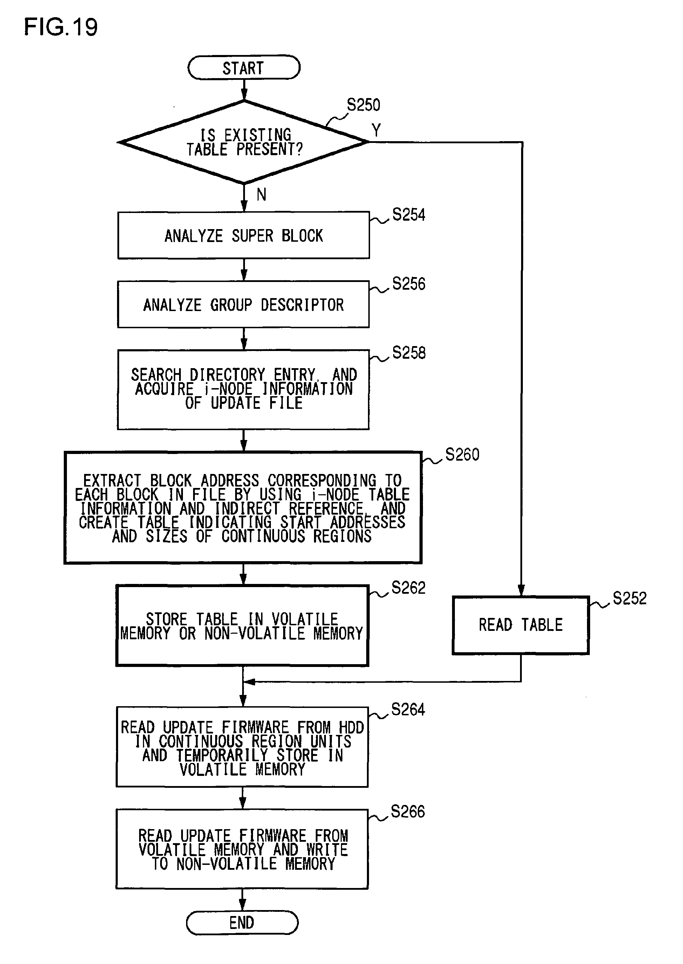

FIG. 19 is a flowchart showing a write procedure by the boot loader 116 of the sixth embodiment of the present invention. If there is an existing table (Y in S250), the reading unit 134 reads the table (S252). If there is no existing table (N in S250), the acquiring unit 130 analyses the super block (S254). The step 254 to the step 266 are identical to the step 10 to the step 20 of FIG. 11.

According to the embodiment of the present invention, a time for creating the table can be reduced because the existing table is to be read. Further, since the time for creating the table is reduced, an updating time of the firmware program can be shortened. Further, a processing time period can be shortened in cases such as wanting to retry a process by using the same update firmware program, or writing in advance upon manufacture.

Accordingly, the present invention has been explained based on the embodiments. These embodiments are mere examples, and it is to be understood by those skilled in the art that various modifications may be made to combinations of the respective constituent features and the respective processes, and that such modifications are also within the scope of the present invention.

Combinations of the first to seven embodiments are also useful. According to this modification, the advantageous effects of the combinations of first to seven embodiments can be obtained.

In the first to seven embodiments, the boot loader 116 has the firmware program as the target of the processing. However, no limitation is made hereof, and for example, the boot loader 116 may use a file other than the firmware program. According to this modification, the present invention can be applied to reading process and writing process for various types of files.

In the first to seven embodiments, the ext2 file system is used as the subject of explanation of the file system of the HDD 104. However, no limitation is made hereof, and for example, a file system other than the ext2, that is ext3 may be used as the file system of the HDD 104. According to this modification, the present invention can be adapted to various types of file systems.

### Reference Signs List

100: processing device, 102: processor, 104: HDD, 106: volatile memory, 108:non-volatile memory,110:detachable memory, 112: tuner, 114: CPU, 116: boot loader, 118: network, 120: server, 130: acquiring unit, 132: creating unit, 134: reading unit, 136: dividing unit, 138: writing unit

### Industrial Applicability

According to the present invention, the process delay of the reading and writing of the file by the boot loader can be shortened.

## Claims

1. A processing device, comprising:
an acquiring unit configured to acquire, from a storage device capable of storing a file by dividing the file into a plurality of blocks, managing information indicating an address of each block configuring the file;
a creating unit configured to create a table indicating a start address and a size of each continuous region by extracting the address of each block from the managing information acquired by the acquiring unit, and aggregating blocks having continuous addresses as a continuous region;
a reading unit configured to read data stored in a non-volatile memory; and
a writing unit configured to divide the data in units of the continuous region from the start address to an end address determined by the size, based on the table created by the creating unit, and write the divided data to the storage device so as to maintain the address of each block configuring the file as indicated in the managing information.

2. The processing device according to claim 1, wherein
the acquiring unit re-acquires managing information indicating the address of each block from the storage device in which the file is stored by being divided into the plurality of blocks,
the creating unit re-creates a table indicating the start address and the size of each continuous region by extracting the address of each block from the managing information re-acquired by the acquiring unit, and re-aggregating blocks having continuous addresses as a continuous region,
the reading unit reads the data of each block configuring the file stored by being divided in the storage device, in the units of the continuous region from the start address to the end address determined by the size, based on the table re-created by the creating unit, and
the writing unit writes the data of each block that is read by the reading unit to the non-volatile memory.

3. The processing device according to claim 1, wherein
in writing the divided data to the storage device, the writing unit updates at least one of an attribute, a file name, and an update time among file information stored in the storage device.

4. A processing device, comprising:
an acquiring unit configured to acquire, from a storage device storing a first firmware program by dividing the first firmware program into a plurality of blocks, managing information indicating an address of each block;
a creating unit configured to create a table indicating a start address and a size of each continuous region by extracting the address of each block from the managing information acquired by the acquiring unit, and aggregating blocks having continuous addresses as a continuous region;
a reading unit configured to read the first firmware program stored by being divided in the storage device, in units of the continuous region from the start address to an end address determined by the size, based on the table created by the creating unit; and
a writing unit configured to update a second firmware program stored in a non-volatile memory by the first firmware program read by the reading unit.

5. The processing device according to claim 4, wherein
in a case where a target of reading is a part of the first firmware program, the reading unit reads only blocks corresponding to the target of reading based on the table created by the creating unit.

6. The processing device according to claim 5, wherein
the reading unit creates virtual addresses by connecting the continuous regions in order, and adjusts the start addresses and the sizes after detecting in which of the continuous regions a start and an end of data that is the part of the target of reading are included.

7. The processing device according to any one of claims 1 to 6, wherein
the creating unit omits the creation of a table by reusing the table that has already been created.

8. A writing method, comprising the steps of:
acquiring, from a storage device capable of storing a file by dividing the file into a plurality of blocks, managing information indicating an address of each block configuring the file;
creating a table indicating a start address and a size of each continuous region by extracting the address of each block from the acquired managing information, and aggregating blocks having continuous addresses as a continuous region;
reading data stored in a non-volatile memory; and
dividing the data in units of the continuous region from the start address to an end address determined by the size, based on the created table, and writing the divided data to the storage device so as to maintain the address of each block configuring the file as indicated in the managing information.

9. A writing method, comprising the steps of:
acquiring, from a storage device storing a first firmware program by dividing the first firmware program into a plurality of blocks, managing information indicating an address of each block;
creating a table indicating a start address and a size of each continuous region by extracting the address of each block from the acquired managing information, and aggregating blocks having continuous addresses as a continuous region;
reading the first firmware program stored by being divided in the storage device, in units of the continuous region from the start address to an end address determined by the size, based on the created table; and
updating a second firmware program stored in a non-volatile memory by the read first firmware program.

10. A program including instructions to cause a computer to execute the steps of:
acquiring, from a storage device capable of storing a file by dividing the file into a plurality of blocks, managing information indicating an address of each block configuring the file;
creating a table indicating a start address and a size of each continuous region by extracting the address of each block from the acquired managing information, and aggregating blocks having continuous addresses as a continuous region;
reading data stored in a non-volatile memory; and
dividing the data in units of the continuous region from the start address to an end address determined by the size, based on the created table, and writing the divided data to the storage device so as to maintain the address of each block configuring the file as indicated in the managing information.

11. A program including instructions to cause a computer to execute the steps of:
acquiring, from a storage device storing a first firmware program by dividing the first firmware program into a plurality of blocks, managing information indicating an address of each block;
creating a table indicating a start address and a size of each continuous region by extracting the address of each block from the acquired managing information, and aggregating blocks having continuous addresses as a continuous region;
reading the first firmware program stored by being divided in the storage device, in units of the continuous region from the start address to an end address determined by the size based on the created table; and
updating a second firmware program stored in a non-volatile memory by the read first firmware program.
